# EUROPEAN PATENT APPLICATION

(11) **EP 1 763 159 A1**
(43) Date of publication of application: **14.03.2007**
(21) Application number: 06018757.2
(22) Date of filing: 07.09.2006
(51) Int. Cl.: H04B 10/16, H04J 14/02

(54) **Optical network regenerator bypass module and associated method**

(30) Priority: 09.09.2005 US 715427 P; 03.05.2006 US 381390
(71) Applicant: Alcatel, 75008 Paris (FR)
(72) Inventor: Butler, David J., 75080 Richardson (DE)
(74) Representative: Schäfer, Wolfgang

(57) **Abstract**

An optical bypass element (88) for an optical communication system. The optical bypass element (88), formed of an optical interleaver, is positioned in parallel with a regenerator (24). Data requiring regeneration is caused to be provided to the regenerator (24) while data not requiring regeneration is bypassed about the regenerator (24) by way of the optical bypass element (88). Once bypassed around the regenerator (24) and once regenerated at the regenerator (24), the respective data is recombined and subsequently routed to communication endpoints.

## Description

### Cross-Reference to Related Applications

The present invention claims the priority of Provisional Patent Application No. 60/715,427, filed on September 9, 2005, the contents of which are incorporated herein by reference.

The present invention relates generally to an optical communication system in which wavelength division multiplexed (WDM) data is communicated. More particularly, the present invention relates to apparatus, and an associated method, that provides routing of first optical data of the WDM data around a regenerator, while permitting second optical data of the WDM data to be applied to the regenerator.

An optical communication system is formed with line terminating equipment within which Electrical-Optical (E-O) and Optical-Electrical (O-E) having two or more different transmission performance characteristics are deployed. Viz., the system includes a network part that requires optical data to be communicated with relatively low transmission impairments and a new network part, permitting of communication of optical data with higher transmission impairments. Optical data communicated in the legacy network is caused to be applied to the optical regenerator while the optical data communicated by way of the new network part is bypassed around the optical regenerator. Data that need not be optically regenerated is bypassed around the regenerator while data that needs to be regenerated is applied to the regenerator.

### Background of the Invention

Much attention has been directed towards optical communication technologies in efforts to develop and to deploy optical communication systems through which to communicate data. Chief amongst the advantages of an optical communication system is the capability of transporting very large amounts of data at very high data throughput rates. An optical communication system typically is formed of a fiber optic network having optical fibers through which optical energy is communicated to communicate data between communication endpoints. Wavelength division multiplexing (WDM) is a conventional technique used to modulate the data that is to be communicated between the communication endpoints. In a typical optical communication system an optical fiber transports optical data on many different communication channels, defined in terms of wavelength or frequency. Data is modulated upon optical carriers of different wavelengths, thereby providing, on each optical fiber, multi-channel communications.

As in any communication system, a receiving endpoint must be able to recreate the informational content of the communicated data. The data, when delivered to the communication endpoint, must, therefore, be of sufficient quality that the informational content of the data may still be recovered. Examples of transmission impairments which might result in the quality of the received signal being impacted are signal to noise ratio, chromatic dispersion, polarization mode dispersion and self phase modulation. The degree to which a received signal quality will be reduced by these impairments is dependent on the data being transmitted and the specific characteristics of the E-O and O-E converters at each end of the transmission system.

Advancements in optical communication technologies have resulted in the resilience of O-E and E-O converters being able to operate over systems with greater transmission impairments

Additions to an existing optical communication system are sometimes made. Additions are made, for instance, when the system is expanded to encompass a new area, such as a new building or new development. And, sometimes, parts of an optical communication system are upgraded, leaving remaining parts operable as originally-implemented. When the new network parts are added to the existing network, the signals generated thereon are sometimes generated on wavelengths set-off from, and interleaved with, the wavelengths used by the existing, i.e., legacy network part. The communication capacity of the network is increased, but without a corresponding increase in the total optical bandwidth over which the signals are communicated.

Optical communication systems sometimes include devices, referred to as regenerators, that regenerate optical signals by performing an Optical-Electrical-Optical (O-E-O) conversion. Regenerators are typically installed where the transmission impairments in the system have reached the threshold for acceptable performance for one or more of the channels being carried. A legacy communication system may require transmission impairments which are lower than newer communication systems and are therefore more likely to require the use of, or additional numbers of, regenerators than would be required in newer systems. When an optical communication system is formed of legacy network parts and new network parts, the different network parts include common paths that extend to an optical regenerator. Some of the optical data delivered to the regenerator must be regenerated by the regenerator, but other parts of the optical data need not be regenerated by the regenerator.

Regeneration of optical data not necessitating regeneration entails needless expense in furnishing the O-E-O regeneration converters at the regenerator site. A scheme by which only the data requiring regeneration pass through the O-E-O converters at a regenerator site would therefore be advantageous.

It is in light of this background information relating to communication of optical data in an optical communication system that the significant improvements of the present invention have evolved.

### Summary of the Invention

The present invention, accordingly, advantageously provides apparatus, and an associated method, for an optical communication system in which wavelength division multiplexed data is communicated.

Through operation of an embodiment of the present invention, a manner is provided by which optical data carried on some of the WDM wavelengths may be selected for regeneration if required while data not requiring regeneration may pass through the regenerator site without undergoing O-E-O regeneration if the data is of a form which does not require regeneration at the regenerator site. When, for instance, an optical communication system is formed of a legacy network portion and a new network portion that exhibit different transmission requirements, the optical data communicated by way of the legacy network portion is applied to the regenerator while the optical data communicated by way of the new network part bypasses the regenerator.

Wavelength division multiplexed data communicated by way of separate parts of the optical communication system is applied to, or bypassed around, the regenerator. Optical data regenerated by the regenerator and optical data bypassed around the regenerator are subsequently recombined by way of a multiplexer.

In another aspect of the present invention, an optical bypass is positioned, in-line with a fiber upon which first optical data and second optical data is transported. The optical bypass element is further positioned in parallel with an optical regenerator. The optical bypass element forms, for instance, an optical interleaver that passes optical data of first wavelengths. When the first optical data, communicated by way of a new optical network portion, is modulated to be of the first wavelengths, the optical data, when delivered to the regenerator, bypasses the regenerator as the optical interleaver permits the optical data to pass there through. When the second optical data, communicated by way of the legacy network part, is modulated to be of the second wavelength, the data, when delivered to the regenerator, is regenerated at the regenerator. Through appropriate selection of the characteristics of the optical interleaver and appropriate modulation of the optical data transported by way of the separate network parts, optical data needing to be regenerated is regenerated, and optical data that does not necessitate regeneration is bypassed around the regenerator. Unnecessary regeneration of optical data is thereby avoided while also permitting optical data that requires regeneration to be regenerated by the regenerator.

In another aspect of the present invention, a recombiner is provided to recombine the bypassed optical data with the data regenerated at the regenerator through the provision of a path extending from the optical bypass element to a multiplexer that multiplexes together the regenerated data with the bypassed data.

The regenerator forms an O-E-O configuration and, the regenerator may include, for instance, a set of couplers to which the optical bypass element is coupled and to which the recombiner extends and thereby to provide a bypass path about the optical regenerator. Additional paths are formable to provide for subsequent channel path expansion.

The optical interleaver provides a passive element that permits bypassing of optical data of selected wavelengths about the regenerator. When the multiplexing is appropriately configured to communicate optical data in a legacy network part at one wavelength or frequency, or set of wavelengths (frequencies), and new-network optical data to be communicated at a second, or second set of, optical wavelengths (frequencies), the data parts necessitating regeneration are regenerated by the optical regenerator, while data parts not needing regeneration are bypassed around the regenerator.

In these and other aspects, therefore, apparatus, and an associated method, is provided for an optical network. The optical network has a regenerator to which first optical data is routed and to which second optical data is routed. An optical bypasser is positioned in-line with paths upon which the first optical data and the second optical data are routed and in parallel with the regenerator. The optical bypasser is configured to route the first optical data through for regeneration. And, the optical bypasser is configured to permit routing of the second optical data to bypass the regenerator. A recombiner is positioned in-line with the optical bypasser. The recombiner is configured to recombine routing paths of the first optical data, regenerated by the regenerator, and the second optical data bypassed around the regenerator.

Concerning the above-mentioned method, it is suggested that said first and second optical channels are alternate channels on a wavelength grid, and that said routing includes providing the first and second optical channels to an optical interleaver, wherein the optical interleaver routes alternate channels on a wavelength grid, routing the first optical channels around the regenerator.

Further, the alternating channels may be even numbered wavelength channels alternating with odd numbered wavelength channels.

Concerning the above-mentioned apparatus, it is suggested that the first optical data is modulated upon first optical channels, the second optical data is modulated upon second optical channels, said first and second optical channels are alternate channels on a wavelength grid, and said optical interleaver routes alternate channels on a wavelength grid, routing the first optical channels to bypass the regenerator.

A more complete appreciation of the present invention and the scope thereof can be obtained from the accompanying drawings that are briefly summarized below, the following detailed description of the presently-preferred embodiments of the present invention, and the appended claims.

### Brief Description of the Drawings

Figure 1 illustrates a functional block diagram of an optical communication system in which an embodiment of the present invention is operable.
Figure 2 illustrates a diagram representative of operation of the bypass element and the regenerator that form part of the optical communication system shown in Figure 1.
Figure 3 illustrates a partial process flow, partial functional block, diagram representative of operation of an embodiment of the present invention.
Figure 4 illustrates a method flow diagram representative of the method of operation of an embodiment of the present invention.

### Detailed Description

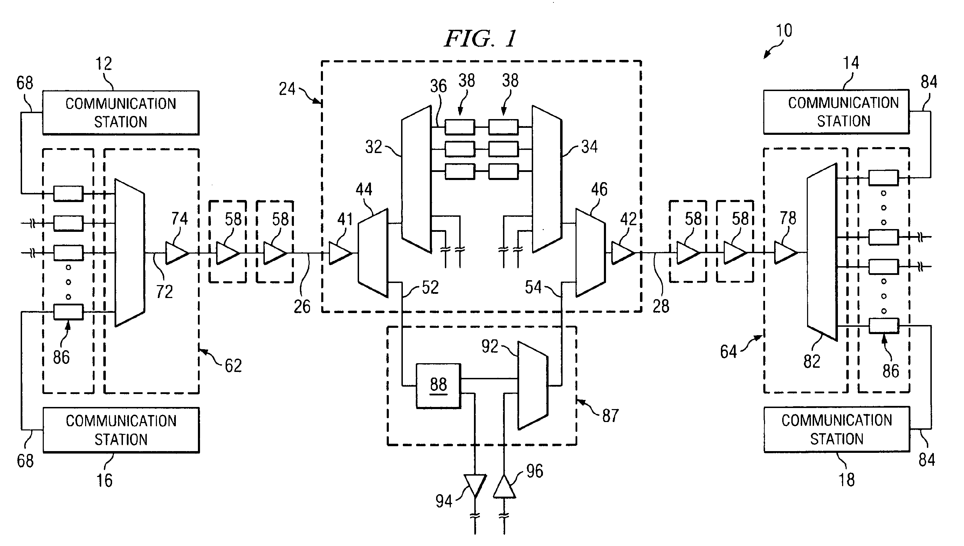

Referring first to Figure 1, an optical communication system, shown generally at 10, provides for the communication of data between line terminating equipment, here represented by, and described in terms of sets of, communication stations forming communication endpoints. Here, two sets of communication stations forming communication endpoints are shown. The communication stations 12 and 14 form a communication station pair between which first optical data is communicated, and the communication stations 16 and 18 are representative of a second pair of communication stations between which second optical data is communicated. The sets formed of the communication stations 12-14 and 16-18 are merely exemplary. Other numbers of, and other combinations of, communication stations are capable of forming communication endpoints between which data is communicated pursuant to operation of the communication system.

Here, the communication system includes both a legacy network portion and a new network portion. The legacy network portion of the communication system requires that data-containing signals exhibit lower transmission impairments than the corresponding signals transported by way of the new network portion of the communication system. In systems where the impairments exceed the threshold at which the informational content of the data is accurately recoverable optical regenerators are sometimes used. In the figure, an optical regenerator 24, a legacy regeneration station, is representative of an optical regenerator used to regenerate a data-containing optical signal provided thereto such that the regenerated signal is of improved OSNR, or other, characteristic. Optical data, provided to the regenerator 24 by way of the line 26, an optical path, i.e., fiber, is regenerated and regenerated data is formed on the line 28. The optical regenerator, in the exemplary implementation, forms an O-E-O (optical-electrical-optical) 3R regenerator. In alternate implementations, the regenerator may form a 2R-regenerator. In any exemplary implementation, however, the regenerator forms a multiple-wavelength channel regenerator.

The exemplary regenerator 24, shown in Figure 1, includes a demultiplexer 32 and multiplexer 34 set that includes a plurality of lines 36 each containing transponders 38 that perform 3R regeneration of the respective lines.
Collocated at the regenerator site there are also shown amplifier elements 41 and 42 that form optical pre-amplifier and post-amplifier elements, respectively. And here, the regenerator also includes splitters 44 and 46.

The optical system further includes a plurality of additional amplifiers 58. The optical system is further shown to include an optical signal multiplexer 62 and optical signal demultiplexer 64.

The multiplexer 62 receives optical signals on a plurality of lines 68 and combines them to form a multi-channel signal WDM (Wavelength Division Multiplex) signal, formed on the line 72. The composite WDM signal is then shown passing through post-amplifier 74 and then applied to the tandemly-positioned line amplifiers 58. Analogously, the demultiplexer 64 includes a pre-amplifier 78 to which optical data is applied, by way of the amplifiers 58 and in-line with the demultiplexer element 82 of the demultiplexer 64. The demultiplexer operates to generate individual optical data channels on the lines 84.

Certain of the lines 68 and certain of the lines 84 include higher-performance transponders 86 that are less susceptible to transmission impairments. These lines, optical fibers, define the new generation portions of the communication system while others of the lines 68 and 84 define the legacy network parts of the communication system. Communication stations 12 and 14 are coupled to lines 68 and 84 of the legacy part of the communication system. And, communication stations 16 and 18 are coupled to lines 68 and 84 of the new network part of the communication system.

During operation, the multiplexer multiplexes data generated on the lines 68 so that a resultant signal, provided by way of the lines 26 to the regenerator, include data communicated upon multiple channels. The data generated on certain of the channels is communicated by way of the legacy part of the system, and data communicated upon others of the channels is communicated by way of a new network part of the communication system. Due to the differing communication requirements of the different parts of the communication system, only the data communicated by way of the legacy part, here represented by communications of data between the communication stations 12 and 14, need to be regenerated by the regenerator 24. Data communicated by way of the new network part, here represented by data communicated between the communication stations 16 and 18, need not be regenerated by the regenerator.

Pursuant to an embodiment of the present invention, apparatus, here forming a by-pass part, 87 is connected in parallel with the regenerator. The bypass part is connected to the regenerator by way of the paths 52 and 54 which include, or form, couplers 44 and 46. The apparatus 87 includes a bypass element 88, formed of an optical interleaver. The optical interleaver is of characteristics to pass certain wavelengths of energy. The interleaver is positioned to receive the optical data provided on the line 26 by way of the splitter 44. Due to the characteristics of the interleaver, portions of the optical data are passed therethrough while other portions of the optical data are blocked. The data channels blocked by the interleaver correspond to those regenerated by O-E-O converters 38. Through appropriate selection of the channels upon which the data communicated in the legacy and new network parts of the optical communication system and selection of the characteristics of the interleaver, legacy-network-communicated data is caused to be passed through the regenerator, and new-network-communicated data is caused to bypass the regenerator by way of the bypass part. The data that must be regenerated is thereby regenerated, and the data that need not be regenerated is bypassed about the regenerator.

The bypass part of the exemplary implementation may further include a multiplexer or optical combiner 92 positioned in-line with the interleaver and with the path 54. Use of the multiplexer or optical combiner permits for future channel growth through connection through paths 94 and 96, respectively.

Wavelengths which are blocked from by-passing the regenerator by the interleaver may be present on output 94 and channels which are presented at input 96 will be multiplexed into the WDM stream 28. Ports 94 and 96 therefore provide an expansion port which can be used for adding or dropping wavelengths at the regenerator site.

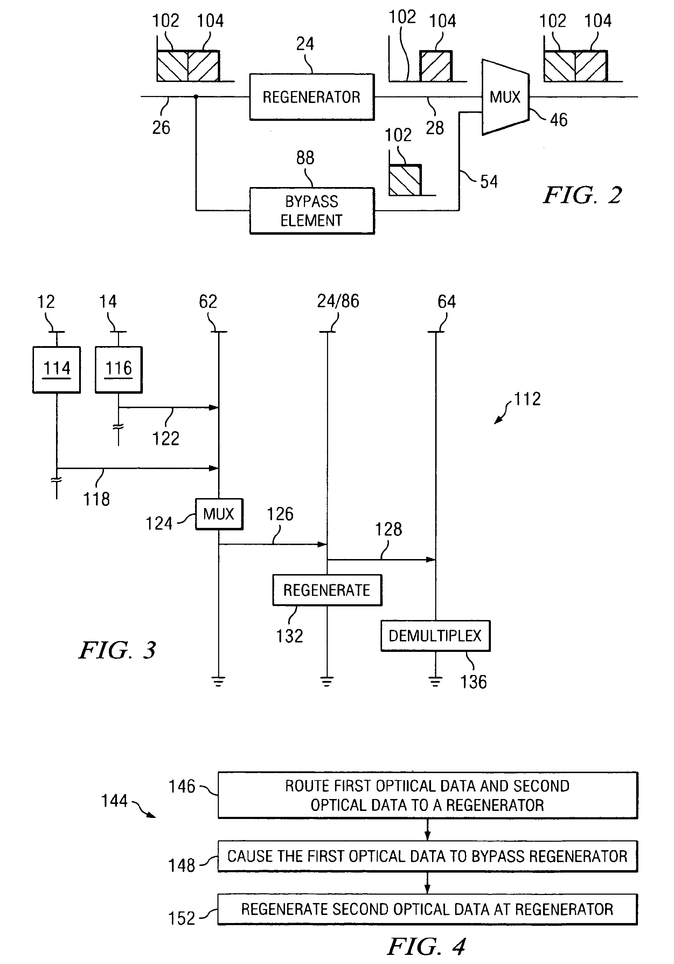

Figure 2 illustrates the signal energy generated upon a set of communication channels, identified as a new channel 102 and a legacy channel 104 during operation of the optical communication system pursuant to an embodiment of the present invention. The signal energy generated upon the channel 102 is representative of data communicated upon the new-network part, such as data communicated between the communication stations 16 and 18 shown in Figure 1. And, the signal energy generated upon the legacy channel 104 is representative of data communicated in the legacy network part of the communication system, such as data communicated between the communication stations 12 and 14. When applied on the line 26, the signal energy of the new channel 102 is passed through the bypass element while the signal energy on the legacy channel 104, here, is not passed through the bypass element. As noted above, in one implementation, the energy of the legacy channel is also passed through the interleaver port. The signal energy at the output side of the bypass element is present only on the new channel 102, and no signal energy is present on the legacy channel 104. Conversely, the output side of the regenerator, signal energy is present only upon the legacy channel 104. No signal energy is present on the new channel 102. Paths extend from the bypass element and the regenerator on the lines 54 and 28, respectively, to the multiplexer 46. The output of the multiplexer includes signal energy on both the new and legacy channels 102 and 104.

Figure 3 illustrates a representation, shown generally at 112, representative of operation of the communication system 10 pursuant to an embodiment of the present invention. Here, data is originated at the communication stations 12 and 14. Data originated at the communication station 12 is modulated upon legacy channels, indicated by the block 114. And, data originated at the communication station 14 is modulated upon new channels 116. Once modulated, the data is communicated, here indicated by the segments 118 and 122, respectively. The data modulated upon the separate channels are multiplexed, indicated by the block 124, at the multiplexer 62. The data is transported, here indicated by the segment 126, to the regenerator and bypass element 24/86. Data that is modulated onto new wavelengths is bypassed, here indicated by the segment 128, around the regenerator, while the data modulated onto legacy wavelengths is regenerated, here indicated by the block 132, at the regenerator. Once regenerated, the legacy wavelengths and new wavelengths are recombined.

The optical data bypassed by the bypass element and regenerated by the regenerator, respectively, is demultiplexed, indicated by the block 136 at the demultiplexer 64. And, the data is forwarded on to the communication stations 14 and 18, respectively.

Figure 4 illustrates a method flow diagram, shown generally at 144, representative of the operation of an embodiment of the present invention. The method routes first optical data and second optical data in an optical network having a regenerator.

First, and as indicated by the block 146, the first optical data and the second optical data is routed to the regenerator. Then, and as indicated by the block 148, the first optical data, routed to the regenerator, is caused to bypass the regenerator and to follow a bypass route that bypasses the regenerator.

And, as indicated by the block 152, routing of the second optical data is regenerated at the regenerator.

Thereby, through operation of an embodiment of the present invention, a manner is provided by which to facilitate communications in an optical communication system. Data communicated in a network portion of the optical communication system requiring lower transmission impairments is caused to be provided to a regenerator while data not requiring regeneration for its communication bypasses the regenerator.

The previous descriptions are of preferred examples for implementing the invention, and the scope of the invention should not necessarily be limited by this description. The scope of the present invention is defined by the following claims.

## Claims

1. Apparatus for an optical network having a regenerator (24) to which first optical data is routed and to which second optical data is routed, said apparatus being **characterized by**:
an optical bypasser (88) positioned in-line with paths upon which the first optical data and the second optical data are routed and in parallel with the regenerator (24), said optical bypasser (88) configured to route the first optical data therethrough, thereby to cause the first optical data to bypass the regenerator (24); and
a recombiner positioned in-line with said optical bypasser (88) and the regenerator (24), said recombiner configured to recombine routing paths of the first optical data, bypassed around the regenerator (24), and the second optical data, regenerated by the regenerator (24).

2. The apparatus of claim 1 wherein said optical bypasser (88) comprises an optical interleaver.

3. The apparatus of claim 1 or 2 wherein the first optical data exhibits first characteristics and the second optical data exhibits second characteristics, the first characteristics exhibited by the first optical data permitting routing thereof through said optical bypasser.

4. The apparatus of claim 3 wherein the second characteristics exhibited by the second optical data prevent routing thereof through said optical bypasser.

5. The apparatus of one of claims 1 to 4 wherein the first optical data and the second optical data are wavelength division multiplexed and are communicated at separate optical frequencies.

6. The apparatus of one of claims 1 to 5 wherein third optical data and fourth optical data are further routed to the regenerator, and wherein said optical bypasser is further configured to route the third optical data therethrough.

7. The apparatus of one of claims 1 to 6 wherein the regenerator comprises a set of couplers and wherein said optical bypasser is positioned in-line with the regenerator by connection to the couplers.

8. The apparatus of claim 7 wherein said recombiner comprises an optically conductive path extending between said optical bypasser and the regenerator.

9. The apparatus of one of claims 1 to 8 further comprising a multiplexer having a set of input terminals and an output terminal, a first input terminal of the set of input terminals connected to said optical bypasser to be provided with the first optical data, bypassed by way of said optical bypasser and the output terminal connected to said recombiner.

10. The apparatus of one of claims 1 to 9 wherein said optical bypasser further comprises an expansion port and wherein said optical bypasser is further configured to route the second optical data to the expansion port.

11. The apparatus of one of claims 1 to 10 wherein the first optical data is communicated via line terminating equipment having first transmission performance characteristics, wherein the second optical data is communicated via line terminating equipment having second transmission performance characteristics.

12. The apparatus of one of claims 1 to 11 wherein said optical by-passer routes alternate channels on an evenly spaced wavelength grid to the regenerator ports and to the optical regenerator by-pass port.

13. A method for routing first optical data and second optical data in an optical network having a regenerator (24), said method being **characterized by** the operations of:
routing the first optical data and the second optical data to the regenerator (24);
causing the first optical data, routed to the regenerator (24), to bypass the regenerator (24) and follow a bypass route that bypasses the regenerator (24); and,
permitting routing of the second optical data through the regenerator (24).

14. The method of claim 13 further comprising the operation of regenerating the second optical data at the regenerator (24).

15. The method of claim 14 further comprising the operation of recombining the first optical data, bypassed about the regenerator (24), and the second optical data, once regenerated at the regenerator (24).

16. The method of one of claims 13 to 15 wherein the first optical data and the second optical data, when routed to the regenerator (24) are wavelength division modulated.

17. The method of one of claims 13 to 16 wherein said operation of causing the first optical data to bypass the regenerator (24) comprises positioning an interleaver in parallel with the regenerator (24).

18. The method of one of claims 13 to 17 wherein said operation of causing the first optical data to bypass the regenerator comprises causing optical data of even wavelength channels to bypass the regenerator, the first optical data modulated at the even wavelength channels.

19. The method of claim 18 wherein said operation of permitting routing comprises permitting routing of optical data of odd wavelength channels, relative to the even wavelength channels, the second optical data modulated at the odd wavelength channels.

20. A method for an optical communication system having a first network part permitting communication of optical data when the optical data is of at least first transmission characteristics and having a second network part permitting communication of optical data when the optical data is of at least second transmission characteristic, the first signal transmission characteristics allowing for greater transmission distance than the second signal transmission characteristics, the first and second network parts, respectively, extending to a regenerator (24), said method being **characterized by**:
modulating the optical data communicated in the first network part upon first optical channels;
modulating the optical data communicated in the second network part upon second optical channels;
routing the first optical data around the regenerator (24); and
regenerating the second optical data at the regenerator (24).
